# EUROPÄISCHE PATENTSCHRIFT

(11) **EP 3 656 589 B1**
(45) Veröffentlichungstag und Bekanntmachung des Hinweises auf die Patenterteilung: **26.01.2022**
(21) Anmeldenummer: 18207364.3
(22) Anmeldetag: 20.11.2018
(51) Int. Cl.: B60H 1/00, B60H 1/24, B60R 13/02

(54) **VERKLEIDUNGSBAUTEIL UND KLIMATISIERUNGSVORRICHTUNG ZUM VERKLEIDEN UND TEMPERIEREN EINES INNENRAUMS EINES PERSONENTRANSPORTMITTELS, INSBESONDERE EINES KRAFTFAHRZEUGS**
COVERING COMPONENT AND AN AIR CONDITIONING SYSTEM FOR COVERING AND CONTROLLING THE TEMPERATURE OF AN INTERIOR OF A PASSENGER TRANSPORT VEHICLE, IN PARTICULAR OF A MOTOR VEHICLE
COMPOSANT D'HABILLAGE ET DISPOSITIF DE CLIMATISATION DESTINÉS À L'HABILLAGE ET À LA MISE EN TEMPÉRATURE D'UN ESPACE INTÉRIEUR D'UN MOYEN DE TRANSPORT DES PERSONNES, EN PARTICULIER D'UN VÉHICULE AUTOMOBILE

(43) Veröffentlichungstag der Anmeldung: 27.05.2020
(73) Patentinhaber: Motherson Innovations Company Limited, London, Greater London EC3A 6AP (GB)
(72) Erfinder: Nogaret, Eric, 68600 Biesheim (FR)
(74) Vertreter: Westphal, Mussgnug & Partner Patentanwälte mbB

(56) Entgegenhaltungen:
- EP-A1- 3 461 690
- DE-A1- 10 258 705
- DE-A1- 19 707 405
- DE-A1-102007 062 898
- DE-A1-102009 052 605
- DE-A1-102016 004 052
- DE-U1-202018 104 055

## Beschreibung

Die vorliegende Erfindung betrifft ein Verkleidungsbauteil zum Verkleiden und Temperieren eines Innenraums eines Personentransportmittels, insbesondere eines Kraftfahrzeugs. Weiterhin betrifft die Erfindung eine Klimatisierungsvorrichtung sowie ein Personentransportmittel mit einem derartigen Verkleidungsbauteil.

Das Personentransportmittel ist insbesondere als Kraftfahrzeug ausgeführt, kann aber auch ein Schiff, ein Flugzeug, ein Zug oder dergleichen sein, wobei die Verwendung von Verkleidungsbauteilen in Innenräumen von Kraftfahrzeugen von besonderer Bedeutung ist. Wenn im Folgenden von einem Kraftfahrzeug die Rede ist, sollen jedoch die anderen zuvor genannten Transportmittel und anderen Anwendungsgebiete nicht ausgeschlossen sein.

In allen Ausgestaltungen des Personentransportmittels wird der Innenraum mehr oder weniger aufwendig verkleidet, um eine ansprechende Gestaltung des Innenraums bereitzustellen. Insbesondere bei Kraftfahrzeugen spielt die Gestaltung des Innenraums eine große Rolle und ist ein wichtiges Kaufargument. Bei der Verkleidung des Innenraums werden Verkleidungsbauteile verwendet, die beispielsweise die Türen des Kraftfahrzeugs von der Innenseite verkleiden. Die Verkleidungsbauteile können auch die Instrumententafel oder Kofferraum- oder Seitenverkleidungen bilden oder Teil hiervon sein.

Die eingangs erwähnten Verkleidungsbauteile dienen insbesondere dazu, Strukturelemente des Kraftfahrzeugs, beispielsweise die Türstrukturelemente oder Strukturelemente im Bereich der Instrumententafeln im Innenraum des Kraftfahrzeugs zu verdecken und somit dem Innenraum des Kraftfahrzeugs ein angenehmes Erscheinungsbild zu geben. Zusätzlich dienen solche Verkleidungsbauteile dazu, Komfortkomponenten mitzugestalten. Beispielsweise werden solche Verkleidungsbauteile dazu eingesetzt, Behälter abzudecken, beispielsweise in der Mittelkonsole, wo sie als Abdeckung eines Staufachs dienen. Darüber hinaus können solche Verkleidungsbauteile auch als Armauflagen ausgestaltet sein.

Der Innenraum eines Kraftfahrzeugs soll dem Kraftfahrzeug-Insassen neben einem angenehmen Erscheinungsbild oftmals auch eine angenehme Haptik vermitteln, so dass ein Fahrer oder Fahrgast, der solche Verkleidungsbauteile berührt, den Kontakt mit ihnen als angenehm empfindet. Ein wesentliches Kriterium ist die Temperatur des Verkleidungsbauteils. Je nach Umgebungstemperatur wird die Haptik durch ein entsprechend temperiertes Verkleidungsbauteils verbessert. Neben der verbesserten Haptik können die temperierten Verkleidungsbauteile zumindest subsidiär zur Temperierung des gesamten Innenraums eingesetzt werden.

Die Temperierung des Innenraums erfolgt üblicherweise mittels Klimaanlagen, welche die entsprechend temperierte Luft über Luftdüsen direkt in den Innenraum einbläst. Eine aktive Temperierung der Verkleidungsbauteile erfolgt nicht. Es sind aber auch Verkleidungsbauteile bekannt, welche flächige Heizelemente mit Heizdrähten oder Elektroden aufweisen, die das Verkleidungsbauteil durchlaufen. Verkleidungsbauteile mit Heizelementen, die Heizdrähte aufweisen, sind in der DE 203 19 024 U1, in der DE 20 2013 005 923 1, der DE 10 2012 015 375 A1, der 20 2016 106 374 U1 und der DE 101 59 814 B4 offenbart. Derartige elektrisch betriebene Verkleidungsbauteile erfordern aber einen vergleichsweise hohen Verkabelungsaufwand. Temperierbare Kraftfahrzeugsitze sind aus der WO 2004/082969 A1 bekannt. Darüber hinaus wird auf die DE 10 2007 062898 A1, die DE 10 2009 052605 A1, die DE 10 2016 004052 A1, die DE 20 2018 104055 U1, die DE 102 58 705 A1 und die DE 197 07 405 A1 verwiesen.

Aufgabe einer Ausführungsform der vorliegenden Erfindung ist es daher, ein temperierbares Verkleidungsbauteil anzugeben, welches mit einfachen Mitteln in eine vorhandene Klimatisierungsvorrichtung integriert werden kann. Darüber hinaus liegt einer Ausgestaltung der vorliegenden Erfindung die Aufgabe zugrunde, eine Klimatisierungsvorrichtung sowie ein Personentransportmittel mit einer derartigen Verkleidungsbauteil zu schaffen.

Diese Aufgabe wird mit den in den Ansprüchen 1, 7 und 10 angegebenen Merkmalen gelöst. Vorteilhafte Ausführungsformen sind Gegenstand der Unteransprüche.

Eine Ausführungsform der Erfindung betrifft ein Verkleidungsbauteil zum Verkleiden und Temperieren eines Innenraums eines Personentransportmittels, insbesondere eines Kraftfahrzeugs, wobei das Verkleidungsbauteil zumindest ein Trägerelement zum Befestigen des Verkleidungsbauteils im Personentransportmittel, einen auf dem Trägerelement aufgebrachten Temperierungskörper, der eine von einem Innenraum des Personentransportmittels wahrnehmbare Sichtseite bildet und eine von Luft durchströmbare Hohlkörperstruktur aufweist, zumindest einen vom Trägerelement gebildeten oder am Trägerelement angeordneten Luftzuführabschnitt zum Zuführen von Luft in den Temperierungskörper, und einen oder mehrere Luftaustrittsabschnitte zum Abführen der zugeführten Luft aus dem Temperierungskörper umfasst.

Der Luftzuführabschnitt ist so ausgestaltet, dass er Luft in die Hohlkörperstruktur des Temperierungskörpers einbringen kann. Mit anderen Worten steht er in Fluidkommunikation mit der Hohlkörperstruktur des Temperierungskörpers. An den Luftzuführabschnitt können Zuführschläuche oder Zuführkanäle einer Klimatisierungsvorrichtung angeschlossen werden. Die Hohlkörperstruktur ermöglicht die Durchströmung des Temperierungskörpers und weist eine Anzahl von Hohlräumen auf.

Das Verkleidungsbauteil kann einen einzigen Luftaustrittsabschnitt aufweisen, der im Wesentlichen so aufgebaut ist wie der Luftzuführabschnitt, so dass Schläuche oder Kanäle einer Klimatisierungsvorrichtung angeschlossen werden können, durch welche die temperierte Luft aus dem Temperierungskörper abgeführt werden kann. Der Temperierungskörper kann aber auch eine Vielzahl von Luftaustrittsabschnitten aufweisen, so dass die temperierte Luft fein verteilt und weitgehend zugfrei vom Temperierungskörper in den Innenraum strömen kann.

Da der Temperierungskörper des erfindungsgemäßen Verkleidungsbauteils die Sichtseite bildet, kommt die Luft im Innenraum des Personentransportmittels mit dem Temperierungskörper in Kontakt. Je nach Temperatur der temperierten Luft, welche dem Temperierungskörper durchströmt, wird die Luft im Innenraum erwärmt oder abgekühlt. Folglich trägt das erfindungsgemäße

Verkleidungsbauteil zur Klimatisierung des Innenraums bei. Je nach Anordnung des Verkleidungsbauteils können auch die Kraftfahrzeug-Insassen beispielsweise ihre Arme auf dem Verkleidungsbauteil ablegen, so dass die Kraftfahrzeug-Insassen je nach Temperatur der den Temperierungskörper durchströmenden Luft ihre Arme kühlen oder wärmen können, was die Haptik des betreffenden Verkleidungsbauteils verbessert.

Erfindungsgemäß umfasst der Temperierungskörper eine die Sichtseite bildende Dekorschicht mit einer erhöhten Wärmeleitfähigkeit von 3 W/(m K) oder mehr Einerseits ermöglicht die Verwendung einer Dekorschicht, das Verkleidungsbauteil optisch an die übrige Gestaltung des Innenraums anzupassen. Andererseits fördert die erhöhte Wärmeleitfähigkeit der Dekorschicht den Wärmetransport zwischen dem Temperierungskörper und dem Innenraum, so dass die Temperierung des Innenraums effektiv gestaltet werden kann.

Erfindungsgemäß ist die Dekorschicht luftundurchlässig. So kann nicht nur mittels der Temperatur der temperierten Luft selbst, sondern auch mit dem Volumenstrom der den Temperierungskörper durchströmenden Luft die Temperatur der Dekorschicht schnell auf den gewünschten Wert eingestellt werden. Insofern ist es möglich, das Verkleidungsbauteil auf eine deutlich von der Temperatur des Innenraums abweichenden Temperatur zu bringen. Insbesondere das Wärmen oder das Kühlen der Arme und/oder der Ellenbogen der Kraftfahrzeug-Insassen lassen sich hierdurch besonders effektiv durchführen. Erfindungsgemäß mündet der Luftaustrittsabschnitt in den Innenraum. Einerseits wird hierdurch die Temperierung des Innenraums des Personentransportmittels beschleunigt, da temperierte Luft direkt in den Innenraum eingeblasen wird. Andererseits kann der Kraftfahrzeug-Insasse insbesondere seine Finger vor den Luftaustrittsabschnitt halten, so dass seine Finger all dem Luftstrom der temperierten Luft ausgesetzt sind. Je nach Temperatur der temperierten Luft kann der Kraftfahrzeug-Insasse seine Finger wärmen oder kühlen. Hierdurch erhält das Verkleidungsbauteil eine zusätzliche Funktion, welche zu einer Erhöhung des Komforts des Innenraums des Personentransportmittels beiträgt.

Erfindungsgemäß umfasst der Temperierungskörper eine am Trägerelement anliegende und luftundurchlässige Wärmeisolierschicht. Die Wärmeisolierschicht sorgt dafür, dass keine oder nahezu keine Wärme oder Kälte in das Trägerelement gelangt, wodurch sichergestellt wird, dass nicht das Trägerelement, sondern der temperiert wird. Die Wärmeisolierschicht soll dabei eine Wärmeleitfähigkeit von weniger als 2 W/(m K) aufweisen.

In einer weitergebildeten Ausführungsform kann die Hohlkörperstruktur des Temperierungskörpers von einem Abstandsgewirke, einer 3D-Strickware oder einem Schaum mit offener Zellstruktur bereitgestellt werden. In dieser Ausführungsform lässt sich die Hohlkörperstruktur auf eine vergleichsweise einfache Weise bereitstellen. Zudem ist es möglich, den Temperierungskörper elastisch auszubilden, dass insbesondere dann, wenn ein Kraftfahrzeug-Insasse seinen Arm oder Ellenbogen auf den Temperierungskörper auflegen will, eine kissenartige und damit angenehme Auflage ermöglicht wird. Zudem ist es in dieser Ausführungsform möglich, den Temperierungskörper so auszugestalten, dass er in vergleichsweise kurzer Zeit wieder in seine ursprüngliche Form zurückkehrt, nachdem der Kraftfahrzeug-Insasse seinen Arm oder seinen Ellenbogen von dem Temperierungskörper genommen hat. Insofern wird ein gleichbleibendes Erscheinungsbild des Innenraums des Personentransportmittels gewährleistet.

Eine weitergebildete Ausführungsform zeichnet sich dadurch aus, dass die Dekorschicht aus Kunstleder, Echtleder oder einem Textil besteht oder von einer Slushhaut gebildet wird. Unter einer Slushhaut wird eine durch Pulversintern von PVC (Polyvinylchlorid) oder von thermoplastischen Elastomeren erzeugte Haut verstanden, welche optisch ähnlich zu Leder ist. In dieser Ausführungsform lässt sich die Dekorschicht auf optisch besonders ansprechende Weise ausführen.

In einer weiteren Ausführungsform umfasst die Dekorschicht zumindest einen Zusatzkörper zum Erhöhen der Wärmeleitfähigkeit. Insbesondere dann, wenn die Dekorschicht aus Kunstleder, Echtleder oder einem Textil besteht oder von einer Slushhaut gebildet wird, kann es sein, dass der Wärmetransport vom Temperierungskörper in den Innenraum des Personentransportmittels nicht ausreichend groß ist. Um den Wärmetransport zu verbessern, werden in dieser Ausführungsform der Dekorschicht Zusatzkörper wie Fasern oder Drähte aus einem Material mit hoher Wärmeleitfähigkeit zugesetzt, mit denen die Wärmeleitfähigkeit der Dekorschicht und damit der Wärmetransport zwischen dem Temperierungskörper und dem Innenraum erhöht werden können.

Eine weitere Ausführungsform zeichnet sich dadurch aus, dass die luftundurchlässige Wärmeisolierschicht als eine Schaumfolie ausgebildet ist. Die isolierte Schicht kann dabei aus PVC (Polyvinylchlorid) oder (PU) Polyurethan bestehen.

Bei einer weiteren Ausführungsform umfasst das Verkleidungsbauteil Temperatursensoren zum Bestimmen der Temperatur im Verkleidungsbauteil. Die Temperatursensoren können in eine Klimatisierungsvorrichtung eingebunden werden, so dass das Verkleidungsbauteil besonders effektiv für die Temperierung des Innenraums des Personentransportmittels eingesetzt werden kann.

Eine Ausbildung der Erfindung betrifft eine Klimatisierungsvorrichtung zum Temperieren eines Innenraums eines Innenraums eines Personentransportmittels, insbesondere eines Kraftfahrzeugs, wobei die Klimatisierungsvorrichtung ein Klimagerät zum Bereitstellen und Fördern von temperierter Luft oder ein Heizelement zum Bereitstellen von erwärmter Luft, ein Verkleidungsbauteil nach einer der zuvor erörterten Ausführungsformen, und zumindest einen mit dem Luftzuführabschnitt verbundenen Zuführkanal zum Führen der temperierten Luft zum Verkleidungsbauteil aufweist.

Die technischen Effekte und Vorteile, die sich mit der vorschlagsgemäßen Klimatisierungsvorrichtung erreichen lassen, entsprechen denjenigen, die für das vorliegende Verkleidungsbauteil erörtert worden sind. Zusammenfassend sei darauf hingewiesen, dass das vorliegende Verkleidungsbauteil in die Klimatisierung des Innenraums des Personentransportmittels eingebunden werden kann, ohne dass eine aufwendige Verkabelung notwendig ist. Ein ohnehin im Personentransportmittel vorhandenes Klimagerät, insbesondere eine Klimaanlage eines Kraftfahrzeugs, braucht nur noch mit dem Zuführkanal an das vorschlagsgemäße Verkleidungsbauteil angeschlossen zu werden. Weitergehende Maßnahmen sind nicht notwendig. Das Klimagerät ist in der Lage, die Luft temperieren, also sowohl zu erwärmen als auch abkühlen kann. Es kann aber auch ein Heizelement vorgesehen werden, welches die Luft nur erwärmen kann. Das Heizelement kann im Vergleich zu einem Klimagerät einfacher aufgebaut sein. Je nach Ausgestaltung des Heizelements muss eine Fördereinrichtung wie ein Ventilator vorgesehen werden, um die erwärmte Luft zum Verkleidungsbauteil zu fördern.

Bei einer weiteren Ausbildung ist vorgesehen, dass die Klimatisierungsvorrichtung einen mit dem Luftaustrittsabschnitt verbundenen Abführkanal zum Abführen der temperierten Luft vom Verkleidungsbauteil aufweist. In dieser Ausbildung lässt sich ein Kreisprozess durchführen, mit welchem ein abgeschlossenes Volumen von temperierter Luft umgewälzt wird. Das Ansaugen von Luft aus der Umgebung des Personentransportmittels kann somit entfallen, was insbesondere bei besonders hohen oder besonders niedrigen Außentemperaturen von Vorteil sein kann, da die Energie, um die temperierten Luft auf die gewünschte Temperatur zu bringen, gering gehalten werden kann.

Eine fortentwickelte Ausbildung gibt vor, dass das Verkleidungsbauteil einen Stauraum abdeckt, der von der temperierten Luft durchströmbar ist, wobei der Zuführkanal eine schaltbare Abzweigung zum Führen der temperierten Luft zum Verkleidungsbauteil und/oder zum Stauraum aufweist. In dieser Ausbildung lässt sich auch der Stauraum, der beispielsweise in der Mittelkonsole eines Kraftfahrzeugs angeordnet sein kann, temperieren, was beispielsweise dann von Vorteil sein kann, wenn dort Getränke gelagert werden, die auf eine bestimmte Temperatur gebracht oder auf dieser gehalten werden sollen. Die Kraftfahrzeug-Insassen können durch ein entsprechendes Schalten der Abzweigung bestimmen, welcher Anteil der temperierten Luft durch den Stauraum strömt.

Eine Ausbildung der Erfindung betrifft ein Personentransportmittel, insbesondere Kraftfahrzeug, umfassend ein Verkleidungsbauteil nach einer der zuvor beschriebenen Ausführungsformen und/oder eine Klimatisierungsvorrichtung nach einer der oben erläuterten Ausbildungen. Die technischen Effekte und Vorteile, die sich mit dem vorschlagsgemäßen Personentransportmittel erreichen lassen, entsprechen denjenigen, die für das vorschlagsgemäße Verkleidungsbauteil und die vorliegende Klimatisierungsvorrichtung erörtert worden sind.

Beispielhafte Ausführungsformen der Erfindung werden im Folgenden unter Bezugnahme auf die beigefügten Zeichnungen näher erläutert. Es zeigen
- Figur 1A: eine prinzipielle Schnittdarstellung durch ein Ausführungsbeispiel eines erfindungsgemäßen Verkleidungsbauteil zum Verkleiden und Temperieren eines Innenraums eines Personentransportmittels,
- Figur 1B: eine nicht maßstäblich vergrößerte isolierte Darstellung des in Figur 1A gekennzeichneten Bereichs X,
- Figur 2: eine prinzipielle Darstellung eines ersten Ausführungsbeispiels einer Klimatisierungsvorrichtung mit einem erfindungsgemäßen Verkleidungsbauteil,
- Figur 3: eine prinzipielle Darstellung eines zweiten Ausführungsbeispiels einer Klimatisierungsvorrichtung mit einem nicht erfindungsgemäßen Verkleidungsbauteil,
- Figur 4: eine prinzipielle Darstellung eines dritten Ausführungsbeispiels einer Klimatisierungsvorrichtung mit einem erfindungsgemäßen Verkleidungsbauteil,
- Figur 5: eine zweite Ausführungsform des erfindungsgemäßen Verkleidungsbauteils, welches in einer Seitentür eines als ein Kraftfahrzeug ausgestalteten Personentransportmittels angeordnet ist, und
- Figur 6: eine prinzipielle Draufsicht auf ein Kraftfahrzeug mit einem erfindungsgemäßen Verkleidungsbauteil.

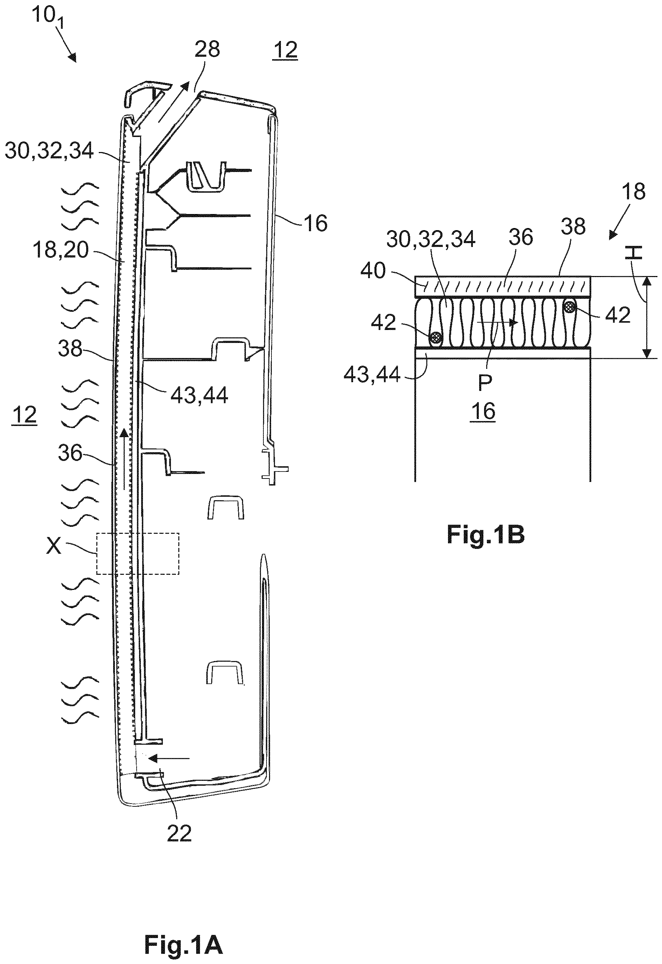

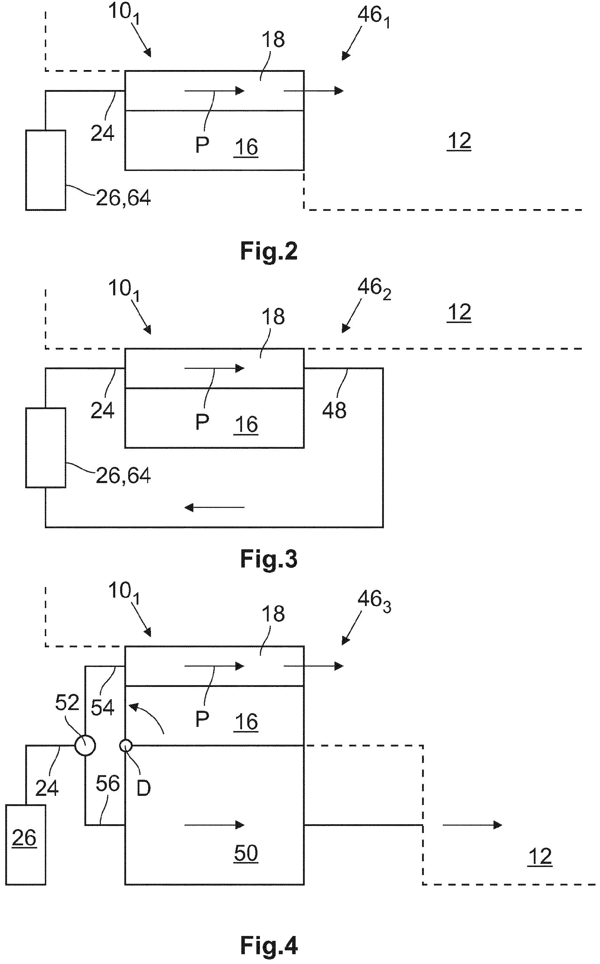

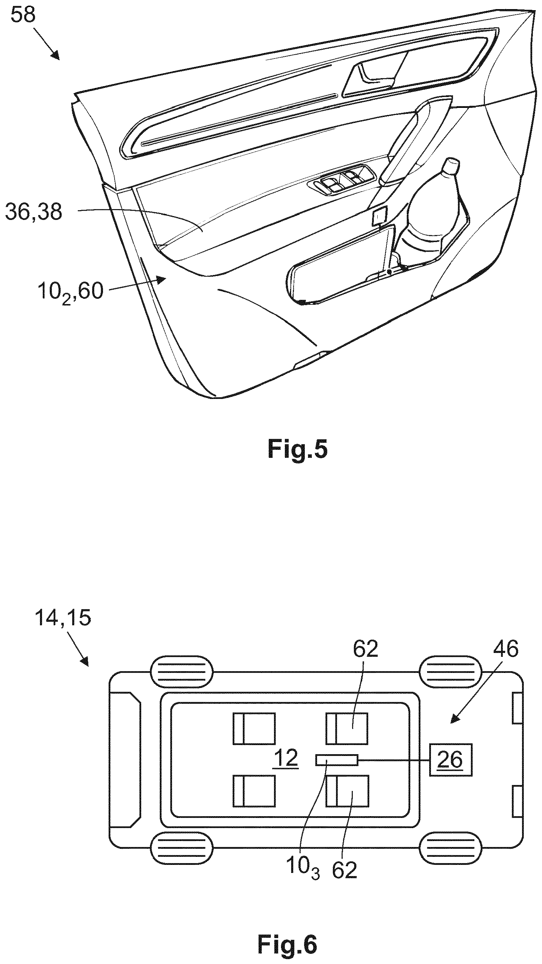

In Figur 1A ist ein erstes Ausführungsbeispiel eines erfindungsgemäßen Verkleidungsbauteils 10₁ zum Verkleiden und Temperieren eines Innenraums 12 eines Personentransportmittels 14, insbesondere eines Kraftfahrzeugs 15 (siehe Figur 6) anhand einer prinzipiellen Schnittdarstellung gezeigt. Das Verkleidungsbauteil 10₁ umfasst ein Trägerelement 16, mit welchem das Verkleidungsbauteil 10₁ mit entsprechenden Tragstrukturen des Personentransportmittels 14 verbunden werden kann. Weiterhin umfasst das Verkleidungsbauteil 10₁ einen auf dem Trägerelement 16 angeordneten Temperierungskörper 18, der eine von Luft durchströmbare Hohlkörperstruktur 20 aufweist. Zum Zuführen von Luft zum Temperierungskörper 18 umfasst das Verkleidungsbauteil 10₁ einen Luftzuführabschnitt 22, der im dargestellten Ausführungsbeispiel vom Trägerelement 16 gebildet wird und an den ein Zuführkanal 24 eines Klimageräts 26 angeschlossen werden kann (siehe Figuren 2 bis 4). Weiterhin umfasst das Verkleidungsbauteil 10₁ einen Luftaustrittsabschnitt 28, mit welchem die zugeführte Luft aus dem Temperierungskörper 18 abgeführt werden kann. Im in Figur 1A dargestellten Ausführungsbeispiel mündet der Luftaustrittsabschnitt 28 in den Innenraum 12 des Personentransportmittels 14.

In Figur 1B ist der in Figur 1A gekennzeichnete Bereich X nicht maßstäblich vergrößert und um 90° gedreht dargestellt. Man erkennt, dass die Hohlkörperstruktur 20 des Temperierungskörpers 18 von einem Abstandsgewirke 30, einer 3D-Strickware 32 oder einem Schaum 34 mit einer offenen Zellstruktur gebildet wird, die jeweils luftdurchlässig sind, was mit dem Pfeil P in Figur 1B symbolisiert ist. Weiterhin umfasst der Temperierungskörper 18 eine Dekorschicht 36, welche zu einer Sichtseite 38 des Verkleidungsbauteils 10₁ hin angeordnet ist. Die Sichtseite 38 ist diejenige Seite des Verkleidungsbauteils 10₁, welche vom Innenraum 12 des Personentransportmittels 14 aus sichtbar ist. Erfindungsgemäß ist die Dekorschicht 36 luftundurchlässig und weist eine erhöhte Wärmeleitfähigkeit von mindestens 3 W/(m K) auf. Die Dekorschicht 36 kann beispielsweise aus Kunstleder, Echtleder oder einem Textil bestehen oder von einer Slushhaut gebildet sein. Je nach Ausbildung der Dekorschicht 36 kann die angegebene Wärmeleitfähigkeit nicht erreicht werden, weshalb in der Dekorschicht 36 eine Anzahl von Zusatzkörpern 40 angeordnet ist, mit denen die Wärmeleitfähigkeit erhöht werden kann. Bei den Zusatzkörpern 40 kann es sich beispielsweise um Kohlefasern oder Drähte handeln.

Weiterhin sind im Verkleidungsbauteil 10₁ mehrere Temperatursensoren 42 angeordnet, mit welchem die Temperatur im Verkleidungsbauteil 10₁ bestimmt werden kann.

Zum Trägerelement 16 hin umfasst der Temperierungskörper 18 eine luftundurchlässige Wärmeisolierschicht 43, deren Wärmeleitfähigkeit maximal 2 W / (m K) beträgt. Im dargestellten Ausführungsbeispiel ist die Wärmeisolierschicht 43 als eine Schaumfolie 44 ausgebildet, die beispielsweise aus PVC oder PU bestehen kann.

In Figur 1B ist die Höhe H des Temperierungskörpers 18 gekennzeichnet, die typischerweise zwischen 4 und 25 mm beträgt.

In Figur 2 ist ein erstes Ausführungsbeispiel einer Klimatisierungsvorrichtung 46₁ zum Temperieren des Innenraums 12 eines Personentransportmittels 14 anhand einer prinzipiellen Darstellung gezeigt. Die Klimatisierungsvorrichtung 46₁ umfasst das bereits erwähnte Klimagerät 26, mit welchem temperierte Luft bereitgestellt werden kann. Das Klimagerät 26 kann Teil einer Klimaanlage (nicht dargestellt) eines Kraftfahrzeugs 15 sein, mit welcher ein Fahrzeug-Insasse die Temperatur einstellen kann, auf welche der Innenraum 12 des Kraftfahrzeugs 15 temperiert werden soll. Das Klimagerät 26 kann alternativ oder kumulativ zur Klimaanlage des Kraftfahrzeugs 15 ausgebildet sein. Mit den bereits erwähnten Temperatursensoren 42 kann eine Regelung der Klimatisierungsvorrichtung 46₁ durchgeführt werden.

Das Klimagerät 26 ist mit dem bereits beschriebenen Zuführkanal 24 mit dem Luftzuführabschnitt 22 des nur annäherungsweise dargestellten Verkleidungsbauteils 10₁ verbunden. Das Klimagerät 26 ist nicht nur in der Lage, die Luft auf die gewünschte Temperatur zu temperieren, sondern auch durch den Zuführkanal 24 zum Verkleidungsbauteil 10₁ zu fördern, wozu das Klimagerät 26 einen nicht dargestellten Ventilator aufweisen kann.

Die vom Klimagerät 26 bereitgestellte temperierte Luft strömt entlang des Zuführkanals 24 in den Temperierungskörper 18. Wie erwähnt, sind die Dekorschicht 36 und die Wärmeisolierschicht 43 des Temperierungskörpers 18 luftundurchlässig, so dass die vom Klimagerät 26 bereitgestellte temperierte Luft die Hohlkörperstruktur 20 des Temperierungskörpers 18 entlang der in Figur 2 mit den Pfeilen P gekennzeichneten Richtung durchströmt. Da der Luftaustrittsabschnitt 28 in den Innenraum 12 des Personentransportmittels 14 mündet, strömt die temperierte Luft nach Durchströmen des Temperierungskörpers 18 in den Innenraum 12. Aufgrund der Tatsache, dass die Wärmeisolierschicht 43 einen Wärmetransport zum Trägerelement 16 verhindert oder zumindest deutlich erschwert und die Dekorschicht 36 aufgrund ihrer erhöhten Wärmeleitfähigkeit einen Wärmetransport zwischen dem Temperierungskörper 18 und dem Innenraum 12 des Personentransportmittels 14 begünstig, nähert sich die Temperatur der Dekorschicht 36 derjenigen der temperierten Luft an. Je nachdem, ob die Temperatur der temperierten Luft höher oder niedriger ist als die Luft im Innenraum 12 des Personentransportmittels 14, findet ein Wärmetransport vom Temperierungskörper 18 zum Innenraum 12 oder umgekehrt statt. Ein Fahrzeug-Insasse kann beispielsweise seinen Arm und/oder seinen Ellenbogen auf dem Verkleidungsbauteil 10₁ ablegen. Aufgrund der Tatsache, dass der Temperierungskörper 18 ein Abstandsgewirke 30, einen 3D-Strickware 32 oder einen Schaum 34 mit offener Zellstruktur aufweist, gibt das Verkleidungsbauteil 10₁ etwas nach, wenn der Fahrzeug-Insasse seinen Arm und/oder seinen Ellenbogen auf dem Verkleidungsbauteil 10₁ ablegt. Der oben beschriebene Wärmetransport findet nun zumindest teilweise auch zwischen dem Temperierungskörper 18 und dem Arm und oder dem Ellenbogen des Fahrzeug-Insassen statt, so dass der Arm und/oder der Ellenbogen gewärmt oder gekühlt wird.

Wie erwähnt, strömt die temperierte Luft durch die Hohlkörperstruktur 20 des Temperierungskörpers 18 und anschließend in den Innenraum 12 des Personentransportmittels 14. Aufgrund des oben erwähnten Wärmetransports wird sich die Temperatur der temperierten Luft beim Durchströmen des Verkleidungsbauteils 10₁ der Temperatur der Luft im Innenraum 12 annähern, je nach gewählter Temperatur der vom Klimagerät 26 bereitgestellten temperierten Luft aber nicht angleichen. Beim Eintritt der temperierten Luft in den Innenraum 12 verbleibt somit ein mehr oder weniger großer Temperaturunterschied zwischen der temperierten Luft und der Luft im Innenraum 12. Je nach Anordnung des Verkleidungsbauteils 10₁ kann der Fahrzeug-Insasse seine Finger unmittelbar vor den Luftaustrittsabschnitt 28 halten, so dass er auch seine Finger wärmen oder kühlen kann.

In Figur 3 ist ein zweites Ausführungsbeispiel der Klimatisierungsvorrichtung 46₂ gezeigt, welche lediglich der Veranschaulichung dient und, welche im Wesentlichen genauso aufgebaut ist wie die Klimatisierungsvorrichtung 46₁ nach dem ersten Ausführungsbeispiel. Allerdings mündet der Luftaustrittsabschnitt 28 nicht in den Innenraum 12, sondern ist mit einem Abführkanal 48 verbunden, mit dem die Luft wieder zurück zum Klimagerät 26 geführt wird, nachdem sie den Temperierungskörper 18 durchströmt hat. Folglich lässt sich in dem zweiten Ausführungsbeispiel der Klimatisierungsvorrichtung 46₂ die Luft im Kreis fördern.

In den in den Figuren 2 und 3 gezeigten Ausführungsbeispielen der Klimatisierungsvorrichtung 46₁, 46₂ kann das Klimagerät 26, welches die Luft temperieren, also sowohl erwärmen als auch abkühlen kann, durch ein Heizelement 64 ersetzt werden, welches die Luft nur erwärmen kann. Im Vergleich zu einem Klimagerät 26, welches zum Abkühlen der Luft üblicherweise einen Verdichter benötigt und damit apparativ relativ aufwendig ist, kann ein Heizelement 64 deutlich einfacher und platzsparender ausgebildet werden. Während aufgrund des apparativ aufwendigeren Aufbaus des Klimageräts 26 wird pro Personentransportmittel 14 (siehe Figur 6) üblicherweise nur ein Klimagerät 26 vorgesehen, während bei der Verwendung eines Heizelements 64 jedes Verkleidungsbauteil 10₁ mit einem eigenen Heizelement 64 versehen werden kann. Hierdurch lässt sich jedes Verkleidungsbauteil 10₁ gezielter ansteuern, allerdings mit dem Nachteil, dass das Heizelement 64 keine Kühlfunktion aufweist.

In Figur 4 ist ein drittes Ausführungsbeispiel der Klimatisierungsvorrichtung 46₃ dargestellt, bei dem das Verkleidungsbauteil 10₁ einen Stauraum 50 abdeckt, der beispielsweise in der Mittelkonsole des Kraftfahrzeugs 15 angeordnet sein kann. Das Verkleidungsbauteil 10₁ ist um eine Drehachse D drehbar im Personentransportmittel 14 befestigt, so dass der Stauraum 50 wahlweise geöffnet und geschlossen werden kann. Die Klimatisierungsvorrichtung 46₃ umfasst eine schaltbare Abzweigung 52, die im Zuführkanal 24 angeordnet ist. Die Abzweigung 52 teilt den Zuführkanal 24 in einen ersten Unterabschnitt 54 und einen zweiten Unterabschnitt 56 auf. Der erste Unterabschnitt 54 ist mit dem Luftzuführabschnitt 22 des Verkleidungsbauteils 10₁ verbunden, während der zweite Unterabschnitt 56 in den Stauraum 50 mündet. Die Abzweigung 52 kann vom Fahrzeug-Insassen geschaltet werden, so dass er das Verhältnis der Menge an temperierter Luft, welche durch den Temperierungskörper 18 und/oder den Stauraum 50 strömen soll, wählen kann. Folglich wird auch der Stauraum 50 temperiert, so dass dort angeordnete Getränke oder Lebensmittel insbesondere gekühlt werden können. Die temperierte Luft, die den Temperierungskörper 18 durchströmt hat, mündet genauso wie die temperierte Luft, welche den Stauraum 50 durchströmt hat, in den Innenraum 12 des Personentransportmittels 14.

In Figur 5 ist ein zweites Ausführungsbeispiel des erfindungsgemäßen Verkleidungsbauteils 10₂ gezeigt, welches in einer Seitentür 58 eines Kraftfahrzeugs 15 angeordnet ist. Es ist nur die Sichtseite 38 des Verkleidungsbauteils 10₂ zu sehen, die von der Dekorschicht 36 gebildet wird. Das Verkleidungsbauteil 10₃ ist als eine Armauflage 60 ausgebildet, so dass der Fahrzeug-Insasse seinen Arm auf das Verkleidungsbauteil 10₂ auflegen und je nach gewählter Temperatur der temperierten Luft wärmen oder kühlen kann.

In Figur 6 ist ein Kraftfahrzeug 16 anhand einer prinzipiellen Draufsicht gezeigt, bei dem ein drittes Ausführungsbeispiel des erfindungsgemäßen Verkleidungsbauteils 10₃ zwischen den beiden Vordersitzen 62 des Kraftfahrzeugs 15 angeordnet ist und einen hier nicht sichtbaren Stauraum 50 bedeckt. In diesem Ausführungsbeispiel können sowohl der Fahrer als auch der Beifahrer ihre zum Verkleidungsbauteil 10₃ hin zeigenden Arme auf dem Verkleidungsbauteil 10₃ ablegen und wärmen oder kühlen lassen.

### Bezugszeichenliste

- 10: Verkleidungsbauteil
- 10₁ bis 10₃: Verkleidungsbauteil
- 12: Innenraum
- 14: Personentransportmittel
- 15: Kraftfahrzeug
- 16: Trägerelement
- 18: Temperierungskörper

- 20: Hohlkörperstruktur
- 22: Luftzuführabschnitt
- 24: Zuführkanal
- 26: Klimagerät
- 28: Luftaustrittsabschnitt

- 30: Abstandsgewirke
- 32: 3D-Strickware
- 34: Schaum
- 36: Dekorschicht
- 38: Sichtseite

- 40: Zusatzkörper
- 42: Temperatursensor
- 43: Wärmeisolierschicht
- 44: Schaumfolie
- 46: Klimatisierungsvorrichtung
- 46₁ bis 46₃: Klimatisierungsvorrichtung
- 48: Abführkanal

- 50: Stauraum
- 52: Abzweigung
- 54: erster Unterabschnitt
- 56: zweiter Unterabschnitt
- 58: Seitentür
- 60: Armauflage
- 62: Vordersitze
- 64: Heizelement

- D: Drehachse
- H: Dicke
- P: Pfeil
- X: Bereich

## Patentansprüche

1. Verkleidungsbauteil (10) zum Verkleiden und Temperieren eines Innenraums (12) eines Personentransportmittels (14), insbesondere eines Kraftfahrzeugs (15), wobei das Verkleidungsbauteil (10)
- zumindest ein Trägerelement (16) zum Befestigen des Verkleidungsbauteils (10) im Personentransportmittel (14),
- einen auf dem Trägerelement (16) aufgebrachten Temperierungskörper (18), der eine von einem Innenraum (12) des Personentransportmittels (14) wahrnehmbare Sichtseite (38) bildet und eine von Luft durchströmbare Hohlkörperstruktur (20) aufweist,
- zumindest einen vom Trägerelement (16) gebildeten oder am Trägerelement (16) angeordneten Luftzuführabschnitt (22) zum Zuführen von Luft in den Temperierungskörper (18), und
- einen oder mehrere Luftaustrittsabschnitte (28) zum Abführen der zugeführten Luft aus dem Temperierungskörper (18) umfasst,
**dadurch gekennzeichnet, dass** der Temperierungskörper (18) eine die Sichtseite (38) bildende, luftundurchlässige Dekorschicht (36) mit einer erhöhten Wärmeleitfähigkeit von 3 W / (m K) oder mehr umfasst, wobei
der Luftaustrittsabschnitt (28) in den Innenraum (12) mündet und der Temperierungskörper (18) eine am Trägerelement (16) anliegende und luftundurchlässige Wärmeisolierschicht (43) mit einer Wärmeleitfähigkeit von weniger als 2 W / (m K) umfasst.

2. Verkleidungsbauteil (10) nach einem der Ansprüche 1 oder 2, **dadurch gekennzeichnet, dass** die Hohlkörperstruktur (20) des Temperierungskörpers (18) von einem Abstandsgewirke (30), einer 3D-Strickware (32) oder einem Schaum (34) mit offener Zellstruktur bereitgestellt wird.

3. Verkleidungsbauteil (10) nach einem der vorherigen Ansprüche,
**dadurch gekennzeichnet, dass** die Dekorschicht (36) aus Kunstleder, Echtleder oder einem Textil besteht oder von einer Slushhaut gebildet wird.

4. Verkleidungsbauteil (10) nach einem der vorherigen Ansprüche,
**dadurch gekennzeichnet, dass** die Dekorschicht (36) zumindest einen Zusatzkörper (40) zum Erhöhen der Wärmeleitfähigkeit umfasst.

5. Verkleidungsbauteil (10) nach einem der vorherigen Ansprüche,
**dadurch gekennzeichnet, dass** die luftundurchlässige Wärmeisolierschicht (43) als eine Schaumfolie (44) ausgebildet ist.

6. Verkleidungsbauteil (10) nach einem der vorherigen Ansprüche,
**dadurch gekennzeichnet, dass** das Verkleidungsbauteil (10) Temperatursensoren (42) zum Bestimmen der Temperatur im Verkleidungsbauteil (10) umfasst.

7. Klimatisierungsvorrichtung (46) zum Temperieren eines Innenraums (12) eines Personentransportmittels (14), insbesondere eines Kraftfahrzeugs (15), wobei die Klimatisierungsvorrichtung (46)
- ein Klimagerät (26) zum Bereitstellen und Fördern von temperierter Luft, oder ein Heizelement (64) zum Bereitstellen von erwärmter Luft,
- ein Verkleidungsbauteil (10) nach einem der vorherigen Ansprüche, und
- zumindest einen mit dem Luftzuführabschnitt (22) verbundenen Zuführkanal (24) zum Führen der temperierten Luft zum Verkleidungsbauteil (10) aufweist.

8. Klimatisierungsvorrichtung (46) nach Anspruch 7,
**dadurch gekennzeichnet, dass** die Klimatisierungsvorrichtung (46) einen mit dem Luftaustrittsabschnitt (28) verbundenen Abführkanal (48) zum Abführen der temperierten Luft vom Verkleidungsbauteil (10) aufweist.

9. Klimatisierungsvorrichtung (46) nach einem der Ansprüche 7 oder 8,
**dadurch gekennzeichnet, dass** das Verkleidungsbauteil (10) einen Stauraum (50) abdeckt, der von der temperierten Luft durchströmbar ist, wobei der Zuführkanal (24) eine schaltbare Abzweigung (52) zum Führen der temperierten Luft zum Verkleidungsbauteil (10) und/oder zum Stauraum (50) aufweist.

10. Personentransportmittel (14), insbesondere Kraftfahrzeug (15), umfassend ein Verkleidungsbauteil (10) nach einem der Ansprüche 1 bis 6 und/oder eine Klimatisierungsvorrichtung (46) nach einem der Ansprüche 7 bis 9.

## Claims

1. Lining component (10) for lining and controlling the temperature of an inner compartment (12) of a passenger transportation means (14), in particular of a motor vehicle (15), wherein the lining component (10) comprises
- at least one support element (16) for attaching the lining component (10) in the passenger transportation means (14),
- a temperature control body (18) which is attached to the support element (16) and which forms a visible side (38) which can be seen from the inner compartment (12) of the passenger transportation means (14) and which comprises an air-permeable hollow body structure (20),
- at least one air intake segment (22) formed by the support element (16) or arranged on the support element (16) for supplying the temperature control body (18) with air, and
- one or more air outlet segments (28) for releasing the supplied air from the temperature control body (18),
**characterized in that** the temperature control body (18) comprises an air-impermeable decorative layer (36) which forms the visible side (38) and which has a high thermal conductivity of 3W / (mK) or more, wherein
the air outlet segment (28) ends in the inner compartment (12) and the temperature control body (18) comprises an air-impermeable heat insulating layer (43) which is applied to the support element (16) and which has a thermal conductivity of less than 2W / (mK).

2. Lining component (10) in accordance with claim 1,
**characterized in that** the hollow body structure (20) of the temperature control body (18) is provided by a knitted spacer fabric (30), a 3D knitted fabric (32) or a foam (34) with an open cell structure.

3. Lining component (10) in accordance with any of the preceding claims, **characterized in that** the decorative layer (36) is comprised of synthetic leather, real leather or of a fabric or is formed by a slush skin.

4. Lining component (10) in accordance with any of the preceding claims, **characterized in that** the decorative layer (36) comprises at least one additional body (40) for raising the thermal conductivity.

5. Lining component (10) in accordance with any of the preceding claims, **characterized in that** the air-impermeable heat insulating layer (43) is implemented as a foam sheet (44).

6. Lining component (10) in accordance with any of the preceding claims, **characterized in that** the lining component (10) comprises temperature sensors (42) for determining the temperature in the lining component (10).

7. An air conditioning apparatus (46) for controlling the temperature of an inner compartment (12) of a passenger transportation means (14), in particular of a motor vehicle (15), wherein the air conditioning device (46) comprises
- an air conditioner (26) for providing and emitting temperature-controlled air, or a heating element (64) for providing warmed air,
- a lining component (10) in accordance with any of the preceding claims, and
- at least one supply channel (24), connected to the air intake segment (22), for conducting the temperature-controlled air to the lining component (10).

8. Air conditioning apparatus (46) in accordance with claim 7,
**characterized in that** the air conditioning apparatus (46) comprises a discharge channel (48), connected to the air outlet segment (28), for discharging the temperature-controlled air from the lining component (10).

9. Air conditioning apparatus (46) in accordance with either of claims 7 or 8, **characterized in that** the lining component (10) covers a storage space (50) through which the temperature-controlled air can flow, wherein the supply channel (24) comprises a switchable junction (52) for diverting the temperature-controlled air to the lining component (10) and/or the storage space (50).

10. Passenger transportation means (14), in particular a motor vehicle (15), comprising a lining component (10) in accordance with any of claims 1 to 6 and/or an air conditioning apparatus (46) in accordance with any of claims 7 to 9.

## Revendications

1. Pièce d'habillage (10) pour habiller et équilibrer la température de l'habitacle (12) d'un moyen de transport de personnes (14), notamment d'un véhicule automobile (15), la pièce d'habillage (10),
- comporte au moins un élément de support (16) pour fixer la pièce d'habillage (10) au moyen de transport de personnes (14),
- un organe de mise en température (18) appliquée sur l'élément de support (16) et formant un côté apparent (38), visible, de l'habitacle (12) du moyen de transport de personnes (14) et présentant une structure de corps creux (20) perméable à l'air,
- au moins un segment d'alimentation en air (22) formé par l'élément de support (16) ou sur l'élément de support (16) pour fournir de l'air à l'organe de mise en température (18), et
- un ou plusieurs segments de sortie d'air (28) pour évacuer l'air d'alimentation de l'organe de mise en température (18),
pièce d'habillage **caractérisée en ce que**
l'organe de mise en température (18) est une couche décorative (36) formant le côté apparent (38), perméable à l'air, ayant une conductivité thermique élevée de 3 W/(mK) ou plus,
le segment de sortie d'air (28) débouchant dans l'habitacle (12) et l'organe de mise en température (18) comprenant une couche d'isolation thermique (43) appliquée contre l'élément de support (16) et perméable à l'air, ayant une conductivité thermique de moins de 2 W/(mK).

2. Pièce d'habillage (10) selon l'une des revendications 1 ou 2, **caractérisée en ce que**
la structure de corps creux (20) de l'organe de mise en température (18) est sous la forme d'un tressage en épaisseur (30), d'un tricot 3D (32) ou d'une mousse (34) à cellules ouvertes.

3. Pièce d'habillage (10) selon l'une des revendications précédentes, **caractérisée en ce que**
la couche décorative (36) est en cuir synthétique, vrai cuir ou matière textile ou une peau préformée.

4. Pièce d'habillage (10) selon l'une des revendications précédentes, **caractérisée en ce que**
la couche décorative (36) comprend au moins un élément supplémentaire (40) pour augmenter la conductivité thermique.

5. Pièce d'habillage (10) selon l'une des revendications précédentes, **caractérisée en ce que**
la couche d'isolation thermique (43), perméable à l'air est sous la forme d'un film de mousse (44).

6. Pièce d'habillage (10) selon l'une des revendications précédentes, **caractérisée en ce que**
la pièce d'habillage (10) comprend des capteurs de température (42) pour la température dans la pièce d'habillage (10).

7. Dispositif de climatisation (46) pour mettre en température l'habitacle (12) d'un moyen de transport de personnes (14) notamment un véhicule automobile (15),
le dispositif de climatisation (46),
- comportant un appareil de climatisation (26) pour fournir et faire circuler de l'air mis en température ou un élément chauffant (64) pour fournir de l'air réchauffé,
- une pièce d'habillage (10) selon l'une des revendications précédentes, et
- au moins un canal d'alimentation (24) relié au segment d'alimentation en air (22) pour guider l'air mis en température vers la pièce d'habillage (10).

8. Dispositif de climatisation (46) selon la revendication 7,
**caractérisé en ce que**
le dispositif de climatisation (46) comporte un canal d'évacuation (48) relié au segment de sortie d'air (28) pour évacuer de la pièce d'habillage (10) l'air mis en température.

9. Dispositif de climatisation (46) selon l'une des revendications 7 ou 8, **caractérisé en ce que**
la pièce d'habillage (10) couvre une cavité (50) traversée par l'air mis en température,
le canal d'alimentation (24) comportant une dérivation (52) commutable pour guider l'air mis en température vers la pièce d'habillage (10) et/ou vers la cavité (50).

10. Moyen de transport de personnes (14) notamment véhicule automobile (15) comprenant une pièce d'habillage (10) selon l'une des revendications 1 à 6 et/ou un dispositif de climatisation (46) selon l'une des revendications 7 à 9.
